(19) **Europäisches Patentamt / European Patent Office / Office européen des brevets**

(11) **EP 1 406 136 B1**

(12) **EUROPEAN PATENT SPECIFICATION**

(45) Date of publication and mention
of the grant of the patent:
**08.12.2010 Bulletin 2010/49**

(51) Int Cl.:
**G05B 13/04** $^{(2006.01)}$

(21) Application number: **02405844.8**

(22) Date of filing: **01.10.2002**

(54) **Estimation of process variables**

Prozessgrössenschätzung

Estimation des grandeurs d'un processus

(84) Designated Contracting States:
**AT BE BG CH CY CZ DE DK EE ES FI FR GB GR
IE IT LI LU MC NL PT SE SK TR**

(43) Date of publication of application:
**07.04.2004 Bulletin 2004/15**

(73) Proprietor: **ABB Research Ltd.
8050 Zürich (CH)**

(72) Inventors:
• **Gallestey Alvarez, Eduardo
5522 Tägerig (CH)**
• **Hovland, Geir
5408 Ennetbaden (CH)**
• **Von Hoff, Thomas
8049 Zürich (CH)**

(74) Representative: **ABB Patent Attorneys
C/o ABB Schweiz AG
Intellectual Property (CH-LC/IP)
Brown Boveri Strasse 6
5400 Baden (CH)**

(56) References cited:
**US-B1- 6 272 432     US-B1- 6 285 971**

• YOUMIN Z ET AL: "A new bias partitioned square-root information filter and smoother for aircraft flight state and parameter estimation" PROCEEDINGS OF THE CONFERENCE ON DECISION AND CONTROL. TUCSON, DEC. 16 - 18, 1992, NEW YORK, IEEE, US, vol. 3 CONF. 31, 16 December 1992 (1992-12-16), pages 741-742, XP010107975 ISBN: 0-7803-0872-7
• KOSTIC D. ET AL: 'Modeling and identification of an RRR-robot' PROCEEDINGS OF THE 40TH. IEEE CONFERENCE ON DECISION AND CONTROL vol. 1, no. 40, 04 December 2001, ORLANDO, US, pages 1144 - 1149

## Description

### Field of the Invention

The invention relates to the field of process control. It relates to a method, computer program and data processing system for the estimation of process variables as described in the preamble of claims 1, 8 and 9, respectively.

### Background of the Invention

Mathematical modelling is an essential tool in modern industry. It makes possible a whole range of procedures for process control, planning, scheduling, optimisation, monitoring etc., where processes considered are technical or physical processes such as industrial production processes, power plants, mechatronic devices etc. The success of the above procedures hinges on the ability of the mathematical models to represent the physical reality at a needed degree of accuracy. The mathematical models incorporate a number of parameters. Some of these parameters have a physical meaning, e.g. mass, flow, temperature, force. Other parameters are coefficients of given parameterised functional dependencies among physical properties of the process. For example, in a turbomachine, i.e. a compressor or a turbine, such dependencies are expressed by polynomials describing relationships such as
mass flow =f1(vane position, pressure ratio, rotor speed, etc)
efficiency=f2(temperature, mass flows, pressures, etc)
where f1 and f1 are static non-linear functions of the bracketed variables, which represent measured or estimated process states in the machine. Graphical representations of these functions are so called "compressor maps". Coefficients of polynomials replacing these functions are usually computed via least square fitting of experimental data. Usually only manufacturers have enough data to carry out the fitting at all relevant conditions. Moreover, the process of fitting is costly and cumbersome. During operation, not in a test set-up but at an arbitrary installation, it is difficult to measure accurately all the values entering the relationships f1 and f2 and therefore to deduce a suitable approximation.
In order to obtain estimates of the relationships on-line, i.e. during process operation, estimation techniques have been developed: The "Kalman Filter" (KF) for linear systems emerged in the 1960's and has been developed into a mature technology for reconstruction of the state of a given linear plant. The "Extended Kalman Filter" (EKF) is used when the KF formulae are applied to estimation of the internal states of nonlinear plants. In this case, linearisations of the true system equations, at current estimates, are used. If parameters entering the plant are unknown then the "State Augmented Extended Kalman Filter" (SAEKF) is used. The SAEKF provides estimates of the polynomial coefficients representing unknown relationships within the mathematical process model, such as the functions f1 and f2 mentioned above. For example, f2 could be represented by a third-order polynomial

$$\text{efficiency } e = \mathbf{k}_0 + \mathbf{k}_1 \begin{bmatrix} x_1 \\ x_2 \\ \vdots \\ x_n \end{bmatrix} + \mathbf{k}_2 \begin{bmatrix} x_1^2 \\ x_2^2 \\ \vdots \\ x_n^2 \end{bmatrix} + \mathbf{k}_3 \begin{bmatrix} x_1^3 \\ x_2^3 \\ \vdots \\ x_n^3 \end{bmatrix}$$

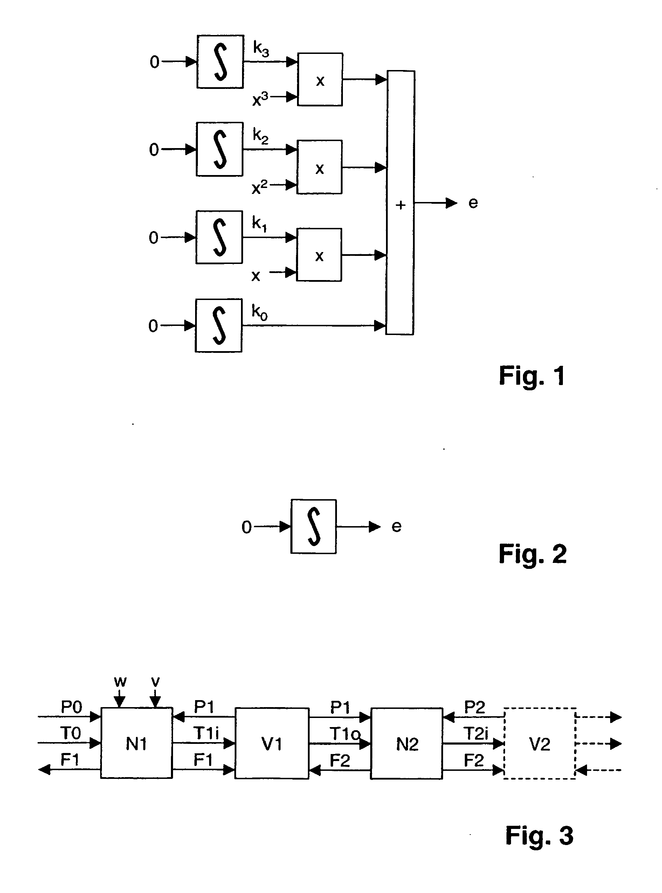

where $k_0$ ... $k_3$ are vectors with polynomial coefficients to be estimated, and $x_1$ ... $x_n$ are process states representing vane position, pressure, speed, etc. The complete estimation of a physical property of the process such as the efficiency e is done according to the block diagram of figure 1. The polynomial relation shown above is represented by the right hand side of the block diagram, comprising multiplication and addition blocks. A state vector according to the SAEKF comprises the coefficient vectors $k_0$ ... $k_3$ as extended state variables. In the block diagram, these states are represented by outputs of integrators having a constant input of zero. The SAEKF algorithm modifies the states, providing updated values for the coefficients $k_0$ ... $k_3$, which are then combined with the states $x_1$ ... $x_n$ to compute an estimate of the efficiency e. However, because the coefficients $k_0$ ... $k_3$ lack physical meaning, their values are very sensitive to variations in the data and are not adequate for extrapolation to conditions other than the ones they were generated from. Furthermore, the polynomial parameterisation restrains the degrees of freedom, which might be crucial for an adequate description of the physical phenomena under investigation. For instance, the real physical relationships might incorporate discontinuities, which would not be adequately represented if the experimental data is represented by polynomial fitting.
In the patent US 6272432, the SAEKF algorithm is applied to the estimation of spacecraft attitude, with a standard six-state Kalman filter including gyro bias and attitude errors augmented by additional filter states representing star tracker Low Spatial Frequency (LSF) errors. The LSF errors are modelled or represented as two parameterized vectors with a respective coefficient vector multiplying members of a family of mutually orthogonal base functions.

The article KOSTIC D.; HENSEN R.; DE JAGER B.; STEINBUCH M.: 'Modeling and identification of an RRR-robot' PROCEEDINGS OF THE 40TH. IEEE CONFERENCE ON DECISION AND CONTROL vol. 1, no. 40, 04 December 2001, ORLANDO, US, pages 1144 - 1149, discloses a simultaneous time-domain identification of static friction parameters using an augmented state extended Kalman Filter.

### *Description of the Invention*

It is therefore an object of the invention to create a method and a computer program for the estimation of process variables of the type mentioned initially, which overcomes the disadvantages mentioned above.

These objects are achieved by a method and a computer program for the estimation of process variables according to the claims 1 and 6.

In the inventive method for estimating a value of a vector of variables p in a mathematical model representing a technical or physical process, the vector p represents one or more properties of the process where these properties are representable by a function of the state vector, and are estimated as an augmented state by the SAEKF.

That is, the process properties such as mass flow or efficiency *themselves* are estimated, and not polynomial coefficients for computing the variables from the state! The surprising result is that this approach works and that the abovementioned disadvantages are overcome.

In a preferred variant of the invention, the physical process comprises a turbomachine, and the vector of variables **p** represents at least one of an efficiency or a mass flow rate of the turbomachine.

In a further preferred variant of the invention, the physical process comprises a heat exchanger, and the vector of variables **p** represents at least one heat transfer coefficient of the heat exchanger.

The computer program for the estimation of process variables according to the invention is loadable into an internal memory of a digital computer, and comprises computer program code means to make, when said computer program code means is loaded in the computer, the computer execute the method according to the invention. In a preferred embodiment of the invention, a computer program product comprises a computer readable medium, having the computer program code means recorded thereon.

Further preferred embodiments are evident from the dependent patent claims.

### **Brief Description of the Drawings**

The subject matter of the invention will be explained in more detail in the following text with reference to preferred exemplary embodiments which are illustrated in the attached drawings, in which:

Figure 1    shows a block diagram for the computation of a process property according to the state of the art;
Figure 2    shows a block diagram for the computation of a process property according to the invention;
Figure 3    shows a block diagram representing the computation of process variables in a flow process;
Figure 4    schematically shows process variables of a heat transfer process;
Figure 5    schematically shows a mechanical system with backlash;
Figure 6    shows a backlash torque $\tau_k$ with memory effect;

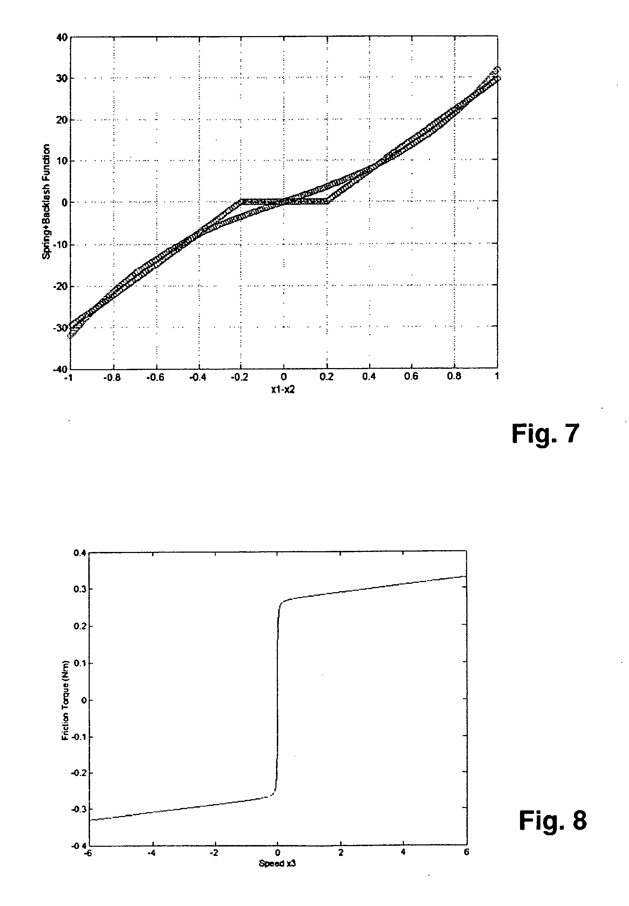

Figure 7    shows a polynomial approximation to a backlash and spring function; and
Figure 8    shows a continuous model approximation of friction torque.

The reference symbols used in the drawings, and their meanings, are listed in summary form in the list of reference symbols. In principle, identical parts are provided with the same reference symbols in the figures.

### **Detailed Description of Preferred Embodiments**

The invention shall first be explained in general terms as a special embodiment of a State Augmented Extended Kalman Filter (SAEKF), and then as applied to specific examples, i.e. a turbomachine, heat exchanger and gear backlash.

The well-known Kalman Filter estimates a system state of a dynamic system that is representable by state-space representation

$$\dot{\mathbf{x}} = \mathbf{f}(\mathbf{x}, \mathbf{u})$$

with state vector **x** and input vector **u**. In the SAEKF, the state is augmented by variables **p** to be estimated, and the state-space model underlying the SAEKF is

$$\begin{bmatrix} \dot{\mathbf{x}} \\ \dot{\mathbf{p}} \end{bmatrix} = \begin{bmatrix} \mathbf{f(x,u,p)} \\ \mathbf{0} \end{bmatrix} + v \qquad\qquad (1)$$

where $\dot{\mathbf{x}} = \mathbf{f(x,u,p)}$ represents a known dependency of the change $\dot{\mathbf{x}}$ in system state from the state vector **x**, the measured values **u** and the vector of variables **p**, and **v** represents a vector of noise disturbances. The original state vector **x** shall be referred to as state vector, whereas the vector of variables **p** is denoted as augmented state. The combined vector

$$\begin{bmatrix} \mathbf{x} \\ \mathbf{p} \end{bmatrix}$$

shall be called *complete state.* Estimates of the states are denoted by $\hat{\mathbf{x}}$ and $\hat{\mathbf{p}}$. In a preferred embodiment of the invention, the variables **p** to be estimated correspond to physical properties of the process, i.e. to properties whose value have an interpretation in terms of the process, as opposed to e.g. coefficients of the polynomial approximations. In the simplest case, the vector **p** is a scalar.

The computation of the state estimate along with associated covariance matrices is done according to a suitable implementation of the known SAEKF approach, as shown e.g. in Robert Stengel, *"Optimal control and estimation"*, Dover Publications, 1994.; and in C. Bohn, *"Recursive Parameter Estimation for Nonlinear Continuous Time Systems through Sensitivity Model Based Adaptive Filters",* PhD Dissertation, University of Bochum, Germany, 2000. The Extended Kalman Filter is closely related to a wide family of system identification methods called Recursive-Prediction-Error-Methods (RPEM). The main difference between the methods in this class lies in the computation of the gradients of the optimisation criterion, see for example L. Ljung, ""System Identification: Theory for the User", 1999, Chapter 11. Hence, the concept of replacing polynomial approximations with one single augmented state also applies in the more general setting of RPEM.

In a preferred embodiment of the invention, the computations according to the SAEKF are executed as summarised by the following steps. Numerous other implementations of the SAEKF are possible, with different numerical accuracy, effort and stability.

1. State estimate propagation, solved e.g. by numeric integration of the complete state equations for the time *t* in the range $t_k \leq t \leq t_{k+1}^-$:

$$\dot{\hat{x}} = f(\hat{x}, u, \hat{p}(t_k))$$

2. Covariance propagation, solved either by numeric integration or by explicit solution of the differential equations:

$$\dot{P}_{xx} = \frac{\partial f}{\partial x^{\mathrm{T}}} P_{xx} + P_{xx} \frac{\partial f^{\mathrm{T}}}{\partial x} + \frac{\partial f}{\partial p^{\mathrm{T}}} P_{xp}^{\mathrm{T}} + P_{xp} \frac{\partial f^{\mathrm{T}}}{\partial p} + Q$$

$$\dot{P}_{xp} = \frac{\partial f}{\partial x^{\mathrm{T}}} P_{xp} + \frac{\partial f}{\partial p^{\mathrm{T}}} P_{pp}$$

$$\dot{P}_{pp} = Q_{pp}$$

3. Predicted output computation:

$$\hat{y}(t_{k+1}) = h\left(\hat{x}(t_{k+1}^{-}), u(t_{k+1}), \hat{p}(t_k)\right)$$

4. Prediction error computation:

$$e(t_{k+1}) = y(t_{k+1}) - \hat{y}(t_{k+1})$$

5. Approximate prediction of error covariance matrix computation:

$$A(t_{k+1}) = R + \frac{\partial h}{\partial x^{\mathrm{T}}} P_{xx}(t_{k+1}^{-}) \frac{\partial h^{\mathrm{T}}}{\partial x} + \frac{\partial h}{\partial x^{\mathrm{T}}} P_{xp}(t_{k+1}^{-}) \frac{\partial h^{\mathrm{T}}}{\partial p}$$

$$+ \frac{\partial h}{\partial p^{\mathrm{T}}} P_{xp}^{\mathrm{T}}(t_{k+1}^{-}) \frac{\partial h^{\mathrm{T}}}{\partial x} + \frac{\partial h}{\partial p^{\mathrm{T}}} P_{pp}(t_{k+1}^{-}) \frac{\partial h^{\mathrm{T}}}{\partial p}$$

6. Computation of Filter gain matrices, where K is the Kalman Filter Gain for the state x and L is the Kalman Filter Gain for the augmented state **p**:

$$K(t_{k+1}) = (P_{xx}(t_{k+1}^{-}) \frac{\partial h^{\mathrm{T}}}{\partial x} + P_{xp}(t_{k+1}^{-}) \frac{\partial h^{\mathrm{T}}}{\partial p}) A^{-1}(t_{k+1})$$

$$L(t_{k+1}) = (P_{xp}^{\mathrm{T}}(t_{k+1}^{-}) \frac{\partial h^{\mathrm{T}}}{\partial x} + P_{pp}(t_{k+1}^{-}) \frac{\partial h^{\mathrm{T}}}{\partial p}) A^{-1}(t_{k+1})$$

7. *State update computation:*

$$\Delta \hat{x}(t_{k+1}) = K(t_{k+1})e(t_{k+1})$$

$$\hat{x}(t_{k+1}^+) = \hat{x}(t_{k+1}^-) + \Delta\hat{x}(t_{k+1})$$

8. Parameter Update computation:

$$\Delta\hat{p}(t_{k+1}) = L(t_{k+1})e(t_{k+1})$$

$$\hat{p}(t_{k+1}) = \hat{p}(t_k) + \Delta\hat{p}(t_{k+1})$$

9. Covariance update computation:

$$P_{xx}(t_{k+1}^+) = P_{xx}(t_{k+1}^-) - K(t_{k+1})A(t_{k+1})K^{\mathrm{T}}(t_{k+1})$$

$$P_{xp}(t_{k+1}^+) = P_{xp}(t_{k+1}^-) - K(t_{k+1})A(t_{k+1})L^{\mathrm{T}}(t_{k+1})$$

$$P_{pp}(t_{k+1}^+) = P_{pp}(t_{k+1}^-) - L(t_{k+1})A(t_{k+1})L^{\mathrm{T}}(t_{k+1})$$

The above steps are performed iteratively, for increasing time $t$ and with measured variables **u**. What makes the SAEKF work, is the connection of the variables **p** and the system states **x** through the covariances of the noise processes.

Turbomachine application:

A compressor map typically describes a dependency of the mass flow **m** of a working fluid through a compressor or turbine, and/or an efficiency e of the compressor or turbine process. Usually, a pressure ratio, a rotational speed and optionally a guide vane angle are measured or estimated, and from these the mass flow and efficiency are determined. This is done either manually from a graphic representation of the map, or in a control system according to look-up tables and computations, or from polynomial approximations to the respective functions. The dependency of the efficiency and mass flow on the known variables is therefore static and nonlinear. Due to degradation of the machine, e.g. by blade erosion, the dependency changes over time, and a continuously updated estimate of the dependency is desired.

For this estimation, the traditional approach is to model the dependency of mass flow on the system state as

$$\dot{m}' = \dot{m}'_{ref} C_1(w) C_2(v)$$

$$C_1(w) = a_0 + a_1 w + a_2 w^2 + a_3 w^3 + \cdots$$

$$C_2(v) = b_0 + b_1 v + b_2 v^2 + b_3 v^3 + \cdots$$

where $\dot{m}'$ is a normalised mass flow, w represents rotational speed and v represents a guide vane angle. From $\dot{m}'$ and the pressure ratio, the estimate of the actual mass flow $\dot{m}$ is computed. Alternatively, the dependency on the pressure ratio dP can be expressed as a third polynomial as illustrated below.

$$\dot{m} = \dot{m}_{ref} C_1(w) C_2(v) C_3(dP)$$

$$C_1(w) = a_0 + a_1 w + a_2 w^2 + a_3 w^3 + \cdots$$

$$C_2(v) = b_0 + b_1 v + b_2 v^2 + b_3 v^3 + \cdots$$

$$C_3(dP) = c_0 + c_1 dP + c_2 dP^2 + c_3 dP^3 + \cdots$$

The SAEKF is applied to estimate the polynomial coefficients $a_0 \ldots a_n$ and $b_0 \ldots b_n$. From a current estimate of said coefficients and from current values of w, v and pressure ratio, the mass flow $\dot{m}$ is determined. An analogous procedure is applied for the efficiency e.

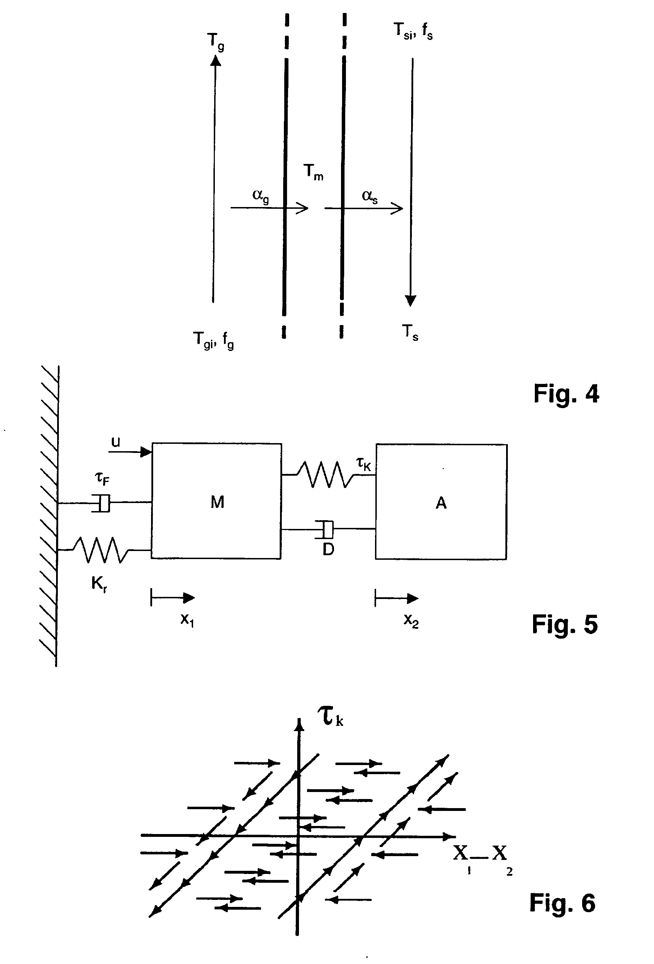

According to the invention, it is not necessary to have an explicit representation of the dependency of $\dot{m}$ and e on the system state. It is sufficient to know that there exists such a dependency. The dependency can be either linear or nonlinear, static or with memory. An example of a nonlinear dependency with memory is a backlash model of a gear transmission as represented by Figure 6.

According to the invention, the variables $\dot{m}$ and e are considered as *augmented states* of the corresponding compressor or turbine model. The SAEKF approach, or a suitable modification, is then used to estimate the augmented states. The SAEKF then tracks the mass flow $\dot{m}$ and efficiency e, although they change both relatively fast with the operating state of the machine, and relatively slow with a degradation of the machine.

In a preferred embodiment of the invention, the variables estimated in this way are influenced by conditions that change slowly with respect to the main process dynamics, e.g. turbine degradation due to erosion and fouling. The efficiency estimate under the same operating conditions shall deteriorate over time, and its value can therefore be used as a basis for preventive maintenance, equipment health monitoring, fault diagnosis, etc.

The operating state or condition undergoes changes with time constants in the range of less than a second to several minutes, whereas the degradation has a noticeable effect over weeks and months. The traditional approach would only compensate for the degradation, whereas the state changes would be taken into account through the computation of $\dot{m}$ and e from the state through the polynomially approximated functions.

In another preferred embodiment of the invention, an explicit representation of the dependency of $\dot{m}$ and e is determined from a parametric fitting of the estimates provided by the SAEKF and the corresponding measured or estimated values of the arguments such as speed, pressure ratio, etc. The explicit model then can be used in offline "what-if" simulations.

The representation according to equation (1), as used in the SAEKF is obtained in the following way: Figure 3 shows a block diagram representing the computation of process variables in a flow process. Arrows entering a block denote input variables to the block, from which the block computes output variables denoted by outgoing arrows. N1 is a flow element which computes a flow F1 through e.g. a turbine or compressor and an exit temperature T1i from inlet pressure P0, outlet pressure P1, inlet temperature T0, rotational speed w and guide vane angle v. The computation corresponds to nonlinear and static, i.e. memoryless functions. Analogous relations hold for flow element N2. A flow element may also represent a valve, with an input corresponding to valve stroke instead of w and v, or simply part of a pipe.

V1 is a storage element, in which a pressure P1 and temperature T1o in the element are computed from inlet temperature T1i and from an inflow F1 and outflow F2. These computations are based on mass and energy balances in the storage element, and represent the dynamic part of the process. In all relations, enthalpies may be used instead of or in addition to temperatures. Flows are mass flows $\dot{m}$ or volume flows.

Flow and storage elements are daisy-chained as in Figure 3 to represent a complete compressor or turbo-group together with preceding and subsequent piping. In order to obtain the state-space representation of equation (1), the states of the storage elements are collected in the state vector **x**, and the flows and optionally the efficiencies are collected in the augmented state vector **p**. In the vector equation $\dot{\mathbf{x}}=\mathbf{f}(\mathbf{x},\mathbf{u},\mathbf{p})$, the vector function **f** represents the modelled dynamics of all the storage elements V1,V2,... Such dynamic models for turbines and thermohydraulic processes are commonly known. According to the invention, the static relations embodied by the flow elements N1,N2,... and leading to the vector of variables **p** are not modelled explicitly. Instead, the variables in **p**, e.g. the flows, are determined by the SAEKF. The derivatives of the variables in **p** are set to zero, as expressed by equation (1), and their values are updated by the SAEKF through the effect of the covariance matrices $P_{xx}$, $P_{xp}$, $P_{pp}$.

Another example of a polynomial approximation is found in Knud Rasmussen, "Calculation methods for the physical properties of air used in the calibration of microphones", Department of acoustic technology, Technical university of Denmark report PL-11b, 1997 (http://www.dat.dtu.dk/docs/PL11b-RAP.PDF)
where the specific heat ratio of humid air is approximated as follows:

$$\kappa \;=\; a_0 + a_1 T + a_2 T^2 + (a_3 + a_4 T + a_5 T^2)x_w + (a_6 + a_7 T + a_8 T^2)P + a_9 x_w^2 + a_{10}P^2$$

$$x_w \;=\; \frac{H}{100}\frac{P_{sv}(T)}{P}f(P,T)$$

$$P_{sv}(T) \;=\; exp(b_0 T^2 + b_1 T + b_2 + b_3 T^{-1})$$

$$f(P,T) \;=\; c_0 + c_1 P + c_2 T^2$$

where $a_0$, $a_1$, $a_2$, $a_3$, $a_4$, $a_5$, $a_6$, $a_7$, $a_8$, $a_9$, $a_{10}$, $b_0$, $b_1$, $b_2$, $b_3$, $c_0$, $c_1$, $c_2$ are polynomial coefficients to be estimated. In the formulas above, $\kappa$ is the specific heat ratio, T is temperature, P is pressure, $x_w$ is a mole fraction of water vapour in air, Psv is the saturation water pressure and H is the relative humidity in percentage. According to the invention, the polynomial for the specific heat capacity $\kappa$ is replaced with one single augmented state and included in a larger model, for example in a model of a compressor, a turbine or a heat exchanger.

Heat exchanger application:

Figure 4 illustrates a model for a heat transfer process in a heat exchanger pipe or pipe section: Hot exhaust gas with an inlet temperature $Tg_i$ and mass flow rate $f_g$ transfers energy to a metal pipe wall with temperature $T_m$. The energy is further transferred from the pipe to steam with an inlet temperature $T_{si}$ and flow rate $f_s$. The gas temperature is changed to $T_g$ and the steam temperature to $T_s$. The following equations may be used to model the process, where heat transfer coefficients from gas to metal and metal to steam are denoted by $\alpha_g$ and $\alpha_s$, respectively:

$$\dot{T}_g = \alpha_g (T_m - T_g) + f_g (T_{gi} - T_g)$$

$$\dot{T}_m = \alpha_g (T_g - T_m) + \alpha_s (T_s - T_m)$$

$$\dot{T}_s = \alpha_s (T_m - T_s) + f_s (T_{si} - T_s)$$

The inlet temperatures $T_{si}$, $T_{gi}$ are assumed to be known, the temperatures $T_g$, $T_m$, $T_s$ are model states. Alternatively, enthalpy is used as a steam state and steam temperature is computed from steam tables. Some or all of the states are measured, with measurement noise vector **v**.

The known approach would be to represent $\alpha_g$ and $\alpha_s$ by polynomials in terms of the flow rates $f_g$ and $f_s$. , i.e.

$$\alpha_g = \alpha_0 + \alpha_1 f_g + \alpha_2 f_g^2 + \ldots$$

$$\alpha_s = \beta_0 + \beta_1 f_s + \beta_2 f_s^2 + \ldots$$

and to estimate the polynomial coefficients $\alpha_0$, $\alpha_1$, ... and $\beta_0$, $\beta_1$ with a SAEKF. According to the invention, the heat transfer coefficients $\alpha_g$ and $\alpha_s$ themselves are incorporated as augmented states in the vector of variables **p** and estimated by the SAEKF.

**Claims**

1. A method for estimating a value of a vector of variables p in a mathematical model representing a technical or physical process, where a state vector x of the model is estimated by a State Augmented Extended Kalman Filter (SAEKF), comprising

   a) measuring values of an input vector u of the technical or physical process,
   b) incorporating the vector of variables p as an augmented state in the SAEKF, and
   c) computing an estimate of a complete state including the state vector x and the augmented state according to a SAEKF algorithm,

   wherein the vector of variables p represents one or more physical properties of the technical or physical process and is representable by a function of the state vector x, **characterised in that**
   the technical or physical process is a process of a turbomachine of a power plant and the vector of variables p represents at least one of an efficiency or a mass flow rate of the turbomachine, or
   the technical or physical process is a process of a heat exchanger of a power plant and the vector of variables **p** represents at least one heat transfer coefficient of the heat exchanger.

2. Method according to claim 1, wherein system equations of the model estimated by the SAEKF are representable as

$$\begin{bmatrix} \dot{\mathbf{x}} \\ \dot{\mathbf{p}} \end{bmatrix} = \begin{bmatrix} \mathbf{f}(\mathbf{x}, \mathbf{u}, \mathbf{p}) \\ \mathbf{0} \end{bmatrix} + v$$

   where f(x,u,p) represents a known dependency of the change $\dot{\mathbf{x}}$ in system state from the system state x, the measured values u and the vector of variables p, and v represents noise disturbances.

3. Method according to one of claims 1 to 2, comprising the step of estimating parameters of a representation of the vector of variables p in terms of the state vector x.

4. Computer program for estimating a value of a vector of variables p in a mathematical model representing a technical or physical process, which computer program is loadable and executable on a data processing unit and which computer program, when being executed, computes, based on measured values of an input vector u of the technical or physical process, and according to a SAEKF algorithm, an estimate of a complete state including a state vector x of the model and the vector of variables p as an augmented state, wherein the vector of variables p represents one or more physical properties of the technical or physical process and is representable by a function of the state vector x, **characterised in that**

the technical or physical process is a process of a turbomachine of a power plant and the vector of variables p represents at least one of an efficiency or a mass flow rate of the turbomachine, or

the technical or physical process is a process of a heat exchanger of a power plant and the vector of variables p represents at least one heat transfer coefficient of the heat exchanger.

**Patentansprüche**

1. Verfahren zum Schätzen eines Wertes eines Vektors aus Variablen p in einem mathematischen Modell, das einen technischen oder physikalischen Prozess repräsentiert, wobei ein Zustandsvektor x des Modells durch ein erweitertes Kalman-Filter für vergrößerte Zustände (SAEKF, State Augmented Extended Kalman-Filter) geschätzt wird, das enthält:

   a) Messen von Werten eines Eingangsvektors u des technischen oder physikalischen Prozesses,
   b) Aufnehmen des Vektors aus Variablen p als einen vergrößerten Zustand in das SAEKF, und
   c) Berechnen eines Schätzwerts eines vollständigen Zustands, der den Zustandsvektor x und den vergrößerten Zustand enthält, in Übereinstimmung mit einem SAEKF-Algorithmus,

   wobei der Vektor aus Variablen p eine oder mehrere physikalische Eigenschaften des technischen oder physikalischen Prozesses repräsentiert und durch eine Funktion des Zustandsvektors x dargestellt werden kann, **dadurch gekennzeichnet, dass**
   der technische oder physikalische Prozess ein Prozess einer Turbomaschine eines Kraftwerks ist und der Vektor aus Variablen p einen Wirkungsgrad und/oder eine Durchflussmenge der Turbomaschine repräsentiert, oder
   der technische oder physikalische Prozess ein Prozess eines Wärmetauschers eines Kraftwerks ist und der Vektor aus Variablen p wenigstens einen Wärmeübertragungskoeffizienten des Wärmetauschers repräsentiert.

2. Verfahren nach Anspruch 1, wobei Systemgleichungen des durch das SAEKF geschätzten Modells dargestellt werden können durch:

$$\begin{vmatrix} \dot{x} \\ \dot{p} \end{vmatrix} = \begin{bmatrix} f(x, u, p) \\ 0 \end{bmatrix} + \nu$$

   wobei f(x,u,p) eine bekannte Abhängigkeit der Änderung $\dot{x}$ des Systemzustands von dem Systemzustand x, den gemessenen Werten u und dem Vektor aus Variablen p repräsentiert und $\nu$ Rauschstörungen repräsentiert.

3. Verfahren nach einem der Ansprüche 1 bis 2, das den Schritt des Schätzens von Parametern einer Darstellung des Vektors aus Variablen p anhand des Zustandsvektors x enthält.

4. Computerprogramm zum Schätzen eines Wertes eines Vektors aus Variablen p in einem mathematischen Modell, das einen technischen oder physikalischen Prozess repräsentiert, wobei das Computerprogramm in eine Datenverarbeitungseinheit geladen werden kann und darin ausführbar ist und wobei das Computerprogramm, wenn es ausgeführt wird, auf der Grundlage von gemessenen Werten eines Eingangsvektors u des technischen oder physikalischen Prozesses und in Übereinstimmung mit einem SAEKF-Algorithmus einen Schätzwert eines vollständigen Zustands, der einen Zustandsvektor x des Modells und den Vektor aus Variablen p als einen vergrößerten Zustand enthält, berechnet,
   wobei der Vektor aus Variablen p eine oder mehrere physikalische Eigenschaften des technischen oder physikalischen Prozesses repräsentiert und durch eine Funktion des Zustandsvektors x darstellbar ist, **dadurch gekennzeichnet, dass**
   der technische oder physikalische Prozess ein Prozess einer Turbomaschine eines Kraftwerks ist und der Vektor aus Variablen p einen Wirkungsgrad und/oder eine Durchflussmenge der Turbomaschine repräsentiert oder
   der technische oder physikalische Prozess ein Prozess eines Wärmetauschers eines Kraftwerks ist und der Vektor aus Variablen p wenigstens einen Wärmeübertragungskoeffizienten des Wärmetauschers repräsentiert.

**Revendications**

1. Procédé d'estimation d'une valeur d'un vecteur de variables **p** dans un modèle mathématique représentant un processus technique ou physique, dans lequel un vecteur d'état **x** du modèle est estimé par un filtre de Kalman Etendu à États Augmentés (SAEKF) consistant à :

   a) mesurer des valeurs d'un vecteur d'entrée **u** du processus technique ou physique,
   b) incorporer le vecteur de variables **p** en tant qu'état augmenté dans le filtre SAEKF,
   et
   c) calculer une estimation d'un état complet comprenant le vecteur d'état **x** et l'état augmenté conformément à un algorithme SAEKF,

   le vecteur de variables **p** représentant une ou plusieurs propriétés physiques du processus technique ou physique et pouvant être représenté par une fonction du vecteur d'état **x, caractérisé en ce que**
   le processus technique ou physique est un processus d'une turbomachine d'une centrale électrique et le vecteur de variables **p** représente au moins l'un parmi un rendement ou un débit massique de la turbomachine, ou
   le processus technique ou physique est un processus d'un échangeur de chaleur d'une centrale électrique et le vecteur de variables **p** représente au moins un coefficient de transfert thermique de l'échangeur de chaleur.

2. Procédé selon la revendication 1, dans lequel les équations du système du modèle estimé par le filtre SAEKF peuvent être représentées par :

$$\begin{bmatrix} \dot{\mathbf{x}} \\ \dot{\mathbf{p}} \end{bmatrix} = \begin{bmatrix} \mathbf{f(x, u, p)} \\ \mathbf{0} \end{bmatrix} + v$$

   où **f(x,u,p)** représente une dépendance connue de la variation $\dot{\mathbf{x}}$ de l'état du système vis-à-vis de l'état **x** du système, des valeurs mesurées **u** et du vecteur de variables **p,** et **v** représente des perturbations de bruit.

3. Procédé selon l'une des revendications 1 à 2, comprenant l'étape consistant à estimer des paramètres d'une représentation du vecteur de variables **p** sous forme du vecteur d'état **x.**

4. Programme informatique destiné à estimer une valeur d'un vecteur de variables **p** dans un modèle mathématique représentant un processus technique ou physique, lequel programme informatique peut être chargé et exécuté sur une unité de traitement de données, et lequel programme informatique, lorsqu'il est exécuté, calcule, sur la base de valeurs mesurées d'un vecteur d'entrée **u** du processus technique ou physique, et conformément à un algorithme SAEKF, une estimation d'un état complet comprenant un vecteur d'état **x** du modèle et le vecteur de variables **p** en tant qu'état augmenté,
   dans lequel le vecteur de variables **p** représente une ou plusieurs propriété(s) physique(s) du processus technique physique et peut être représenté par une fonction du vecteur d'état **x, caractérisé en ce que** le processus technique ou physique est un processus d'une turbomachine d'une centrale électrique et le vecteur de variables **p** représente au moins l'un parmi un rendement et un débit massique de la turbomachine, ou
   le processus technique ou physique est un processus d'un échangeur de chaleur d'une centrale électrique et le vecteur de variables **p** représente au moins un coefficient de transfert thermique de l'échangeur de chaleur.

**Fig. 1**

**Fig. 2**

**Fig. 3**

**Fig. 4**

**Fig. 5**

**Fig. 6**

**Fig. 7**

**Fig. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6272432 B

**Non-patent literature cited in the description**

- **KOSTIC D. ; HENSEN R. ; DE JAGER B ; STEINBUCH M.** Modeling and identification of an RRR-robot' PROCEEDINGS OF THE 40TH. *IEEE CONFERENCE ON DECISION AND CONTROL,* 04 December 2001, vol. 1 (40), 1144-1149